# EUROPÄISCHE PATENTSCHRIFT

(11) **EP 4 004 410 B1**
(45) Veröffentlichungstag und Bekanntmachung des Hinweises auf die Patenterteilung: **23.10.2024**
(21) Anmeldenummer: 20746177.3
(22) Anmeldetag: 23.07.2020
(51) Int. Cl.: C08K 3/04, C08K 3/34, C08K 5/00, F16J 15/3284

(54) **DYNAMISCHE WELLENABDICHTUNG**
DYNAMIC SHAFT SEAL
JOINT D'ARBRE DYNAMIQUE

(30) Priorität: 29.07.2019 DE 102019120368
(43) Veröffentlichungstag der Anmeldung: 01.06.2022
(73) Patentinhaber: Carl Freudenberg KG, 69469 Weinheim (DE)
(72) Erfinder: MENZEL, Jasmin, 69469 Weinheim (DE); TRABER, Boris, 69493 Hirschberg (DE); ADLER, Matthias, 64646 Heppenheim (DE); FLEISCHMANN, Eva, 64665 Alsbach-Hähnlein (DE); PORTELA CUBILLO, Christine, 64404 Bickenbach (DE)
(74) Vertreter: Banse & Steglich Patentanwälte PartmbB
(86) Internationale Anmeldenummer: PCT/EP2020/070828
(87) Internationale Veröffentlichungsnummer: WO 2021/018733

(56) Entgegenhaltungen:
- WO-A1-2018/222530
- JP-A- 2013 023 575
- US-A1- 2013 102 719
- US-A1- 2015 233 373
- US-A1- 2015 252 902
- MOLLER BJO?RN P ET AL: "Herstellung, Charakterisierung und Weiterverarbeitung von Carbon Nanotube Dispersionen", 1 January 2013 (2013-01-01), XP055828343, Retrieved from the Internet <URL:https://elib.uni-stuttgart.de/bitstream/11682/6823/1/Dissertation_B_P_Moller.pdf> [retrieved on 20210728], DOI: 10.18419/opus-6806
- ECKERT DIPL.-ING VICTORIA: "Wachstumsmechanismen und Oberflächeneigenschaften undotierter und N-dotierter Kohlenstoffnanoröhren DISSERTATION", 22 July 2019 (2019-07-22), XP055828337, Retrieved from the Internet <URL:https://core.ac.uk/download/pdf/236378875.pdf> [retrieved on 20210728]

## Beschreibung

### Technisches Gebiet

Die Erfindung betrifft dynamische Wellenabdichtungen, die elastomeres Material und Graphen umfassen. Außerdem betrifft die Erfindung tribologische Systeme, die Wellen und dynamische Wellenabdichtungen umfassen, Verwendungen von dynamischen Wellenabdichtungen sowie Verfahren zur Verringerung von Abrieb.

### Stand der Technik

Die vorliegende Erfindung betrifft allgemein das Gebiet der Dichtungstechnik. In der Dichtungstechnik unterscheidet man zwischen Dichtkörpern für statische Anwendungen und Dichtkörpern für dynamische Anwendungen. Dichtkörper für dynamische Anwendungen dichten regelmäßig tribologische Systeme ab, bei denen sich der Dichtkörper und eine Gegenlauffläche relativ zueinander bewegen. In Folge der Relativbewegung wird am Dichtkörper Abrieb erzeugt. Dieser wird als Verschleiß sichtbar. Als Folge des Verschleißes kann der Dichtkörper undicht werden bzw. ausfallen. Im Betrieb wird regelmäßig auch an der Gegenlauffläche des Dichtkörpers Abrieb erzeugt. Dieser Abrieb kann ebenfalls zu Undichtigkeiten des tribologischen Systems führen.

Füllstoffe in einem Dichtkörper können geeignet sein, dessen Verschleiß zu reduzieren. Als Füllstoffe in Dichtkörpern werden im Allgemeinen mineralische Füllstoffe eingesetzt. Mineralische Füllstoffe sind harte Füllstoffe. Teilweise wird eine große Menge an mineralischen Füllstoffen eingesetzt, um eine ausreichende Verringerung des Verschleißes von Dichtkörpern zu erzielen. Dies führt gleichzeitig zu einer Erhöhung der Härte des Dichtkörpers. Durch die erhöhte Härte kommt es zu einem verstärkten Abrieb an der Gegenlauffläche des Dichtkörpers. Ein durch mineralische Füllstoffe hart ausgebildeter Dichtkörper reduziert typischerweise die Lebensdauer eines dynamisch belasteten tribologischen Systems aus Dichtkörper und Gegenlauffläche.

Dynamische Wellenabdichtungen, z.B. Radialwellendichtringe, sind Dichtkörper für dynamische Anwendungen, die in rotatorisch belasteten tribologischen Systemen eingesetzt werden. In solchen tribologischen Systemen bildet die dynamische Wellenabdichtung einen Dichtkörper, dessen Gegenlauffläche regelmäßig eine Welle ist. Ein Verschleiß des Dichtkörpers zeigt sich in solchen Systemen durch einen Abrieb an der dynamischen Wellenabdichtung. Ein Verschleiß der Gegenlauffläche des Dichtkörpers zeigt sich durch einen Abrieb an der Welle. Ein solcher Abrieb an der Welle wird als Welleneinlauf bezeichnet. Ein Welleneinlauf führt regelmäßig zu Leckage des tribologischen Systems aus dynamischer Wellenabdichtung und Welle.

Für tribologische Systeme mit dynamischer Wellenabdichtung und Welle wird beobachtet, dass harte dynamische Wellenabdichtungen zu einem relativ hohen Abrieb an der Welle führen. Andererseits schützen weiche dynamische Wellenabdichtungen die Welle vor Abrieb, werden aber ihrerseits selber relativ stark abgerieben. Zwischen diesen gegenläufigen Tendenzen des Abriebs an der dynamischen Wellenabdichtung einerseits und des Abriebs an der Welle andererseits muss wünschenswerter Weise ein geeigneter Ausgleich gefunden werden. Einen solchen Ausgleich zu finden ist oft schwierig. Im Stand der Technik bekannte dynamische Wellenabdichtungen sind hier noch verbesserungswürdig.

Im Automobilbereich eingesetzte dynamische Wellenabdichtungen unterliegen aufgrund stetig zunehmender Drehzahlen, Drücke und Temperaturen immer höheren Belastungen. Im Automobilbereich führt insbesondere ein dynamisches Fahrverhalten zu einem erhöhten Verschleiß von dynamischen Wellenabdichtungen und deren Gegenlaufflächen.

Im Stand der Technik wird auch vorgeschlagen, Füllstoffe auf Basis von Kohlenstoff einzusetzen. CN 105968446 A beschreibt synthetische Materialien zur Herstellung von Dichtungen, welche u.a. Ruß enthalten. CN 107345038 A beschreibt ein Dichtungselement, welches u.a. wurmförmigen Graphit und Graphen enthält. CN 107090107 A beschreibt die Verwendung von Graphen in einem abriebbeständigen Kautschuk bzw. Gummi. EP 3 124 534 A1 beschreibt Dichtkörper, die Carbonfasern enthalten. US 2018/0086901 A1 beschreibt Elastomer-Nanoverbundstoffe, welche einen funktionalisierten Füllstoff enthalten. Der funktionalisierte Füllstoff kann u.a. funktionalisiertes Graphen sein und ist für eine Lastverschiebung zwingend mit einem Elastomer vernetzt. Die US2015/0252902A1 betrifft dynamische Dichtungssysteme, gemäß der Präambel von Anspruch 1, mit einem elastomeren Material, das verschiedene Beschichtungen aufweisen kann, unter anderem Graphen.

Als Füllstoff in Dichtkörpern werden auch Carbon Nanotubes (CNTs; Kohlenstoffnanoröhrchen) eingesetzt. DE 10 2014 014 392 A1 beschreibt Dichtkörper, bei denen CNTs zu einer Elastomermischung zugemischt sind. CN 106380755 A beschreibt fluorhaltige Elastomere für Dichtungen, die Graphen und CNTs enthalten können. Der Einsatz von CNTs hat Nachteile. Die CNTs müssen durch aufwändige Verfahren in der Elastomermischung verteilt werden. Die Verstärkung durch die CNTs führt regelmäßig zu einer erhöhten Viskosität der Rohmischung, was deren Verarbeitung erschweren kann. Langzeitfolgen des Einsatzes von CNT sind noch nicht geklärt. Aufgrund der Faserstruktur der CNT bestehen Bedenken hinsichtlich Gesundheit, Sicherheit und Umwelt (HSE-Bedenken; HSE = *Health Safety Environment*). Aufgrund eines hohen Lichtabsorptionsvermögens ist keine Einfärbbarkeit CNT-haltiger Elastomermischungen gegeben. Aufgrund von tiefschwarzen, glänzenden Oberflächen von Bauteilen aus einer CNT-haltigen Elastomermischung ist eine automatische Sichtkontrolle in der Produktion erschwert. Aufgrund des hohen Aspektverhältnisses der CNTs kommt es zu einer Anisotropie der Charakteristika einer CNT-haltigen Elastomermischung.

Bei solchen Füllstoffen auf Basis von Kohlenstoff ist ein wesentlicher Nachteil, dass die Dichtkörper im Allgemeinen wegen der geringen Härte des Kohlenstoffs einen sehr hohen Abrieb aufweisen.

### Aufgabe der Erfindung

Der Erfindung liegt die Aufgabe zugrunde, dynamische Wellenabdichtungen bereitzustellen, welche die oben beschriebenen Nachteile zumindest teilweise und möglichst ganz überwinden.

Aufgabe der Erfindung ist es auch, in einem tribologischen System einen Ausgleich zwischen dem Abrieb an einer dynamischen Wellenabdichtung einerseits und dem Abrieb an deren Gegenlauffläche andererseits zu schaffen.

Aufgabe der Erfindung ist es dabei insbesondere, gleichzeitig eine Verbesserung der Verschleißbeständigkeit einer dynamischen Wellenabdichtung als auch eine Verringerung des Abriebs von deren Gegenlauffläche zu erreichen.

Aufgabe der Erfindung ist es auch, eine Verbesserung des mechanischen Wertebilds einer dynamischen Wellenabdichtung insgesamt zu erzielen. Insbesondere soll für den Automobilsektor eine dynamische Wellenabdichtung bereitgestellt werden, die den sich aus einem dynamischen Fahrverhalten ergebenden Herausforderungen gerecht wird.

Aufgabe der Erfindung ist es auch, die Schwierigkeiten bekannter dynamischer Wellenabdichtungen zu umgehen. Insbesondere sollen fehlende Einfärbbarkeit und erschwerte automatische Sichtkontrolle, HSE-Problematiken, Anisotropie der mechanischen Eigenschaften und/oder schwere Verarbeitbarkeit von dynamischen Wellenabdichtungen umgangen werden.

### Darstellung der Erfindung

Die vorliegende Erfindung löst die zuvor genannte Aufgabe durch dynamische Wellenabdichtungen, tribologische Systeme, Verwendungen und Verfahren gemäß den Patentansprüchen.

Gegenstand der Erfindung ist ein dynamische Wellenabdichtung, umfassend:
(a) elastomeres Material, und
(b) Graphen ohne chemisch modifizierte Oberfläche in einer Menge von 0,1 bis 2 phr, bezogen auf 100 Gewichtsteile des elastomeren Materials, als einzigem Bestandteil der dynamischen Wellenabdichtung aus elementarem Kohlenstoff.

### Dynamische Wellenabdichtung

Eine dynamische Wellenabdichtung an sich ist den hier angesprochenen Fachleuten bekannt. Ein bevorzugtes Bespiel für eine erfindungsgemäße dynamische Wellenabdichtung ist ein Radialwellendichtring. Radialwellendichtringe (RWDR) sind Lippendichtungen, wobei im Betrieb eine Dichtlippe radial an einem drehenden Teil anliegt. Die Dichtwirkung des Radialwellendichtrings basiert auf einem elastohydrodynamischen Rückfördereffekt. Dieser Rückfördereffekt beruht regelmäßig auf zwei unterschiedlichen Dichtkantenwinkeln und einem charakteristischen Verschleiß der Gegenlauffläche. Das abzudichtende Medium sollte sich immer auf der Seite mit dem größeren Dichtkantenwinkel befinden. Wird auf der Seite mit dem kleineren Dichtkantenwinkel Medium angeboten, so wird dieses auf die Seite mit dem größeren Dichtkantenwinkel gepumpt. Radialwellendichtringe sind somit typischerweise aktive dynamische Wellenabdichtungen und können leckagefrei abdichten.

Erfindungsgemäß kann die Lebensdauer der erfindungsgemäßen dynamischen Wellenabdichtung verlängert werden. Die erfindungsgemäße dynamische Wellenabdichtung führt im Betrieb zu einem Ausgleich zwischen einem Abrieb an der dynamischen Wellenabdichtung selber und dem Abrieb an ihrer Gegenlauffläche. Die erfindungsgemäße dynamische Wellenabdichtung hat eine verbesserte Verschleißbeständigkeit und führt gleichzeitig zu einem geringeren Abrieb an ihrer Gegenlauffläche. Dadurch wird insgesamt der Verschleiß des tribologischen Systems verringert, das die dynamische Wellenabdichtung und die Gegenlauffläche umfasst, und die Lebensdauer des Systems erhöht. Ein System aus der erfindungsgemäßen dynamischen Wellenabdichtung und ihrer Gegenlauffläche bleibt regelmäßig länger dicht.

### Bestandteil (a)

Die erfindungsgemäße dynamische Wellenabdichtung umfasst als Bestandteil (a) elastomeres Material. Ein elastomeres Material kann sich bei Zug- und/oder Druckbelastung elastisch verformen. Nach der Belastung kehrt das elastomere Material in seine ursprüngliche, unverformte Gestalt zurück. Erfindungsgemäß wird das elastomeres Material bevorzugt durch einen oder mehrere formfeste, elastisch verformbare Kunststoffe gebildet, mehr bevorzugt durch einen formfesten, elastisch verformbaren Kunststoff. Erfindungsgemäß ist das elastomere Material mit dem Bestandteil (b) nicht verknüpft oder vernetzt, insbesondere nicht über funktionelle Gruppen verknüpft oder vernetzt. Das elastomere Material ist mit dem Bestandteil (b) insbesondere nicht über ein oder mehrere Metallionen (z.B. Zinkionen, Zn²⁺) verknüpft oder vernetzt.

### Bestandteil (b)

Die erfindungsgemäße dynamische Wellenabdichtung umfasst als Bestandteil (b) Graphen ohne chemisch modifizierte Oberfläche in einer Menge von 0,1 bis 2 phr, bezogen auf 100 Gewichtsteile des elastomeren Materials, als einzigem Bestandteil aus elementarem Kohlenstoff.

Graphen ist allgemein die Bezeichnung für eine Modifikation des Kohlenstoffs mit zweidimensionaler Struktur. In dieser Modifikation ist jedes Kohlenstoffatom im Winkel von 120° von drei weiteren Kohlenstoffatomen umgeben, sodass sich ein bienenwabenförmiges Muster bzw. eine Graphenebene ausbildet. Die Kohlenstoffatome von Graphen sind sp²-hybridisiert. Jedes Kohlenstoffatom kann drei gleichwertige σ-Bindungen zu anderen Kohlenstoffatomen ausbilden. Die Kohlenstoff-Kohlenstoff-Bindungslängen sind alle gleich und betragen idealerweise 142 pm (1,42•10⁻¹⁰ m). Die dritten, nicht hybridisierten 2p-Orbitale stehen senkrecht zur Graphenebene und bilden ein delokalisiertes π-Bindungssystem aus. Ideales Graphen wird somit durch eine einlagige Kohlenstoffschicht gebildet (monolagiges Graphen). Monolagiges Graphen hat eine ideale Schichtdicke von 0,335 nm (3,35•10⁻¹⁰ m). Erfindungsgemäß umfasst das eingesetzte Graphen bevorzugt mindestens teilweise monolagiges Graphen. Erfindungsgemäß kann das eingesetzte Graphen optional ausschließlich aus monolagigem Graphen bestehen.

In der industriellen Anwendung wird auch mehrlagiges Graphen mit weniger als 10 Kohlenstoffschichten als Graphen bezeichnet. Erfindungsgemäß weist das eingesetzte Graphen bevorzugt weniger als 10 Kohlenstoffschichten auf.

Erfindungsgemäß kommt Graphen als elementarer Kohlenstoff zum Einsatz. Damit kommt das Graphen als solches zum Einsatz, d.h. Graphen ohne chemisch modifizierte Oberfläche. Das Graphen ist dementsprechend nicht funktionalisiert. Das Graphen ist insbesondere weder über kovalente noch über nicht-kovalente Bindungen funktionalisiert. Anders gesagt weist das Graphen keine funktionellen Gruppen auf. Das Graphen weist insbesondere keine Sulfonatgruppe, keine Phosphonatgruppe, keine Carboxylatgruppe, keine Carboxygruppe, keine Sulfonsäuregruppe, keine Phosphonsäuregruppe, keine Aminogruppe, keine Hydroxygruppe, keine Thiolgruppe und/oder keine Alkylgruppe und auch keine Kombination dieser Gruppen auf. Insbesondere wird kein Graphen verwendet, dessen Oberfläche mit Aminobenzoesäure oder Polyacrylamid chemisch modifiziert ist.

Ohne an die Theorie gebunden zu sein wird davon ausgegangen, dass das Graphen auch wegen seiner nicht modifizierten Oberfläche die Oberfläche der dynamischen Wellenabdichtung vorteilhaft modifiziert. Es wird davon ausgegangen, dass die nicht modifiziert Oberfläche des Graphens ein besonders günstiges Benetzungsverhalten des Schmiermediums bewirkt, das sich vorteilhaft auf den Schmierzustand des Wellendichtringes auswirkt. Es wird davon ausgegangen, dass die Modifizierung der Oberfläche der dynamischen Wellenabdichtung durch ein mit dem elastomeren Material vernetztes Graphen nicht oder nur in viel geringerem Ausmaß erzielbar ist. Es wird darüber hinaus davon ausgegangen, dass selbst wenn sich die Benetzbarkeit der Oberfläche der dynamischen Wellenabdichtung, z.B. einer Dichtlippe der dynamischen Wellenabdichtung, durch eine Oberflächenmodifikation des Graphens verbessern sollte - wofür erfindungsgemäß keine Anhaltspunkte gefunden wurden - sich andere Eigenschaften des Bulk-Materials (umfassend Bestandteile (a) und (b)) nachteilig verhalten bzw. entwickeln können. Entsprechend kann mit dem erfindungsgemäßen nicht-modifizierten Graphen ein Optimum erreicht werden, insbesondere ein Ausgleich zwischen den unterschiedlichen tribologischen und abdichtenden Eigenschaften der dynamischen Wellenabdichtung.

Die erfindungsgemäße dynamische Wellenabdichtung ist eine rotatorische Dichtung. Es wurde überraschend gefunden, dass eine Zugabe von Graphen zu dynamischen Wellenabdichtungen dazu führt, das Verschleißverhalten bei rotatorischer Relativbewegung zwischen dynamischer Wellenabdichtung und Gegenlauffläche sowohl hinsichtlich des Abriebs an der dynamischen Wellenabdichtung als auch an der Gegenlauffläche zu verbessern. Dagegen wurden in Versuchen bei Einsatz von Graphen in dynamischen Dichtungen mit translatorischer Relativbewegung zwischen Dichtung und Gegenlauffläche keine positiven Einflüsse auf das Verschleißverhalten beobachtet.

Die Einheit *"parts per hundred rubber",* abgekürzt als "phr", ist eine übliche Einheit in der gummi-chemischen Industrie. Hiermit werden die Massenanteile der einzelnen Mischungsbestandteile in einem Rezept einer Elastomermischung bezeichnet. Dabei werden diese Angaben jeweils auf 100 (Massen-)Teile des elastomeren Materials bezogen.

Erfindungsgemäß ist das Graphen in der erfindungsgemäßen dynamischen Wellenabdichtung in einer Menge von 0,1 bis 2 phr, bezogen auf 100 Gewichtsteile des elastomeren Materials, enthalten. Die Menge von 0,1 bis 2 phr Graphen kann dazu beitragen, das mechanische Wertebild der dynamischen Wellenabdichtung insgesamt zu verbessern. Die erfindungsgemäße dynamische Wellenabdichtung kann dadurch insbesondere im Automobilsektor zum Einsatz kommen. Die erfindungsgemäße dynamische Wellenabdichtung kann bei einem dynamischen Fahrverhalten eine Dichtigkeit eines tribologischen Systems mit der dynamischen Wellenabdichtung längerfristig gewährleisten.

Das Graphen bildet in der erfindungsgemäßen dynamischen Wellenabdichtung den einzigen Bestandteil aus elementarem Kohlenstoff, d.h. die erfindungsgemäße dynamische Wellenabdichtung enthält keine weiteren Bestandteile aus elementarem Kohlenstoff, insbesondere keinen Ruß, keine CNTs und kein Graphit. Abgesehen vom Graphen sind in der erfindungsgemäßen dynamischen Wellenabdichtung auch keine sonstigen Modifikationen elementaren Kohlenstoffs enthalten.

Durch den Einsatz von Graphen als einzigem Bestandteil aus elementarem Kohlenstoff in der erfindungsgemäßen dynamischen Wellenabdichtung ist die dynamische Wellenabdichtung besser einfärbbar und erleichtert in der Produktion eine automatische Sichtkontrolle. Für die erfindungsgemäße dynamische Wellenabdichtung werden aufgrund des Einsatzes von Graphen als einzigem Bestandteil aus elementarem Kohlenstoff keine HSE-Problematiken und keine Anisotropie seiner mechanischen Eigenschaften erwartet. Gleichzeitig wird eine bessere Verarbeitbarkeit erwartet.

### Erfindungsgemäß eingesetztes Graphen gegenüber Rußen

Ruße enthalten regelmäßig sp³-hybridisierte Kohlenstoffatome. Erfindungsgemäß eingesetztes Graphen unterscheidet sich von Rußen unter anderem dadurch, dass die Kohlenstoffatome des Graphen sp²-hybridisiert sind.

Ruße sind regelmäßig pulverförmige, amorphe Feststoffe, die üblicherweise zu 80 bis 99,5 Gew.-% aus Kohlenstoff bestehen. Erfindungsgemäß eingesetztes Graphen unterscheidet sich von Rußen unter anderem dadurch, dass das Graphen bevorzugt aus mehr als 99,5 Gew.-% Kohlenstoff besteht.

Ruße bestehen in der Regel aus kugelförmigen Primärpartikeln. Die Primärpartikel haben typischerweise eine Größe von 10 bis 300 nm. Die Primärpartikel sind oftmals zu kettenförmigen, teilweise klumpenartigen Aggregaten zusammengewachsen. Die Aggregate können sich zusammenlagern und Agglomerate bilden. Erfindungsgemäß eingesetztes Graphen unterscheidet sich von Rußen unter anderem dadurch, dass Graphen nicht aus kugelförmigen Partikeln besteht, insbesondere nicht aus Partikeln mit einer Größe von 10 bis 300 nm.

### Erfindungsgemäß eingesetztes Graphen gegenüber Graphit

Graphit ist kristallin. Graphit kristallisiert entweder im hexagonalen Kristallsystem (hexagonaler Graphit) oder im rhomboedrischen Kristallsystem (rhomboedrischer Graphit). Hexagonaler Graphit kristallisiert in der Raumgruppe P6₃/mmc mit den Gitterparametern a = 2,46•10⁻¹⁰ m und c = 6,71•10⁻¹⁰ m. Rhomboedrischer Graphit kristallisiert in der Raumgruppe R-3m mit den Gitterparametern a = 3,64•10⁻¹⁰ m und α = 36.82°. Erfindungsgemäß eingesetztes Graphen unterscheidet sich von Graphit unter anderem dadurch, dass das Graphen nicht kristallin ist. Erfindungsgemäß eingesetztes Graphen unterscheidet sich von Graphit unter anderem dadurch, dass das Graphen nicht in der Raumgruppe P6₃/mmc kristallisiert, insbesondere nicht mit den Gitterparametern a = 2,46•10⁻¹⁰ m und c = 6,71•10⁻¹⁰ m. Erfindungsgemäß eingesetztes Graphen unterscheidet sich von Graphit unter anderem dadurch, dass das Graphen nicht in der Raumgruppe R-3m kristallisiert, insbesondere nicht mit den Gitterparametern a = 3,64•10⁻¹⁰ m und α = 36.82°.

Graphit hat eine spezifische Oberfläche nach BET (gemäß DIN ISO 9277:2014-01) von üblicherweise 9 bis 11 m²/g. Erfindungsgemäß eingesetztes Graphen unterscheidet sich von Graphit unter anderem dadurch, dass das Graphen eine spezifische Oberfläche nach BET (gemäß DIN ISO 9277:2014-01) von bevorzugt 150 bis 1000 m²/g, mehr bevorzugt von 150 bis 500 m²/g und noch mehr bevorzugt von 180 bis 260 m²/g aufweist.

### Erfindungsgemäß eingesetztes Graphen gegenüber Carbon Nanotubers (CNTs)

Carbon Nanotubes bestehen aus einer aufgerollten, einlagigen Kohlenstoffschicht. Carbon Nanotubes haben eine dreidimensionale, röhrenförmige Struktur. Graphen hat eine schichtartige, zweidimensionale Struktur. Erfindungsgemäß eingesetztes Graphen unterscheidet sich von Carbon Nanotubes unter anderem dadurch, dass das Graphen nicht aufgerollt ist. Erfindungsgemäß eingesetztes Graphen unterscheidet sich von Carbon Nanotubes unter anderem dadurch, dass das Graphen keine röhrenförmige Struktur aufweist.

### Weitere bevorzugte Ausführungsformen

Es ist erfindungsgemäß bevorzugt, dass die dynamische Wellenabdichtung Graphen in einer Menge von 0,1 bis 1,5 phr, mehr bevorzugt in einer Menge von 0,2 bis 1,0 phr, noch mehr bevorzugt in einer Menge von 0,3 bis phr 0,7, insbesondere bevorzugt in einer Menge von 0,4 bis phr 0,6 und am meisten bevorzugt in einer Menge von 0,5 phr, bezogen auf 100 Gewichtsteile des elastomeren Materials, umfasst. Erfindungsgemäß wurde gefunden, dass der relativ weiche Füllstoff Graphen in einer dynamischen Wellenabdichtung deren Verschleiß sowie den Verschleiß der Gegenlauffläche der dynamischen Wellenabdichtung in einem tribologischen System verbessern kann. Es wurde in diesem Zusammenhang überraschenderweise gefunden, dass bereits geringe Mengen an Graphen von bevorzugt 0,1 bis 1,5 phr, mehr bevorzugt von 0,2 bis 1,0 phr, noch mehr bevorzugt 0,3 bis phr 0,7, insbesondere bevorzugt 0,4 bis phr 0,6 und am meisten bevorzugt 0,5 phr das Verschleißverhalten insgesamt verbessern. Dies war überraschend, weil für geringe Mengen an weichem Graphen kein Einfluss auf das Verschleißverhalten zu erwarten war. Ohne an die Theorie gebunden zu sein wird davon ausgegangen, dass das Graphen auch in geringen Mengen eine Wechselwirkung zwischen der Oberfläche der dynamischen Wellenabdichtung und regelmäßig eingesetzten Schmierstoffen verbessert.

Es ist erfindungsgemäß bevorzugt, dass das Graphen eine Schichtdicke von < 3,35 nm aufweist, mehr bevorzugt von < 2,68 nm, noch mehr bevorzugt von < 2,01 nm, insbesondere bevorzugt von < 1,34 nm und noch weiter bevorzugt von < 0,67 nm. Erfindungsgemäß wurde überraschend gefunden, dass sich mit Graphen als Füllstoff mit Abmessungen im Nanobereich ein weiter verbessertes Verschleißverhalten der dynamischen Wellenabdichtung erzielen lässt. Ohne an die Theorie gebunden zu sein wird davon ausgegangen, dass Graphen trotz seiner geringen Schichtdicken die Oberfläche der dynamischen Wellenabdichtung vorteilhaft modifiziert.

Es ist erfindungsgemäß bevorzugt, dass die dynamische Wellenabdichtung aus einer Zusammensetzung besteht, die einen Druckverformungsrest von ≤ 16% aufweist, mehr bevorzugt einen Druckverformungsrest von ≤ 13%, bestimmt gemäß DIN ISO 815, A. Der Druckverformungsrest (DVR) ist ein Maß dafür, wie sich ein elastomeres Material bzw. eine elastomere Zusammensetzung bei lang andauernder, konstanter Druckverformung und anschließender Entspannung verhält. Es hat sich gezeigt, dass eine erfindungsgemäße dynamische Wellenabdichtung mit niedrigem Druckverformungsrest verbesserte Verschleißeigenschaften und Dichtungseigenschaften kombiniert.

Es ist erfindungsgemäß bevorzugt, dass das elastomere Material ein Material umfasst ausgewählt aus der Gruppe ("Gruppe eM") bestehend aus: Fluorkautschuk (FKM), Ethylvinylacetat (EVA), Nitril-Butadien-Kautschuk (NBR), hydriertem Nitril-ButadienKautschuk (HNBR), Siliconelastomeren, Naturkautschuk (NR), Styrol-Butadien-Kautschuk (SBR), Ethylen-Propylen-Dien-Kautschuk (EPDM), Ethylen-Propylen-Kautschuk (EPM), Acrylat-Kautschuk (ACM), Perfluor-Kautschuk (FFKM), Vinyl-Methyl-Polysiloxan (VMQ), Phenyl-Vinyl-Methyl-Polysiloxan (PVMQ), Fluormethyl-Vinyl-Polysiloxan (FVMQ), Polyisopren (IR), Butylkautschuk (IIR), Chlorbutylkautschuk (CIIR), Brombutylkautschuk (BIIR), Ethylen-Acrylat-Kautschuk (AEM), Butadienkautschuk (BR), Chloropren-Kautschuk (CR), Epichlorhydrin-Kautschuk (ECO), chlorsulfoniertem Polyethylen-Kautschuk (CSM), Polyurethan (PU), thermoplastischen Elastomeren (TPE), Acrylnitril-Butadien-Styrol (ABS) und Styrol-Butadien-Styrol (SBS) sowie Mischungen davon. Durch eine Auswahl des elastomeren Materials aus dieser Gruppe ergibt sich eine breite Variabilität der elastomeren Eigenschaften der dynamischen Wellenabdichtung.

Es ist erfindungsgemäß bevorzugt, dass das elastomere Material aus nur einem elastomeren Material besteht, mehr bevorzugt aus nur einem elastomeren Material ausgewählt aus der vorstehenden Gruppe eM. Indem nur ein elastomeres Material verwendet wird, wird die Herstellung der dynamischen Wellenabdichtung leichter, da kein Vermischen unterschiedlicher elastomerer Materialien erforderlich ist.

Es ist erfindungsgemäß bevorzugt, dass das elastomere Material chemisch nicht modifiziert ist. Das elastomere Material weist bevorzugt keine funktionellen Gruppen auf. Das elastomere Material weist insbesondere bevorzugt keine Hydroxygruppe, keine Aminogruppe, keine Ethergruppe, keine Estergruppe, keine Amidgruppe, keine Sulfonatgruppe, keine Sulfonsäuregruppe, keine Carboxygruppe und/oder keine Carboxylatgruppe auf. Da das elastomere Material chemisch nicht modifiziert werden muss, ist das elastomere Material kostengünstiger und mit weiteren Bestandteilen der dynamischen Wellenabdichtung leichter kompatibel.

Es ist erfindungsgemäß bevorzugt, dass das elastomere Material Fluorkautschuk und/oder Nitril-Butadien-Kautschuk umfasst. Es ist erfindungsgemäß mehr bevorzugt, dass das elastomere Material Fluorkautschuk umfasst. Es ist erfindungsgemäß noch mehr bevorzugt, dass das elastomere Material nur aus Fluorkautschuk besteht. Bei der Verwendung von Fluorkautschuk wurde in praktischen Versuchen eine verbesserte Verschleißbeständigkeit erzielt. Bei Kontakt mit Kraftstoffen ist Fluorkautschuk chemisch besonders stabil.

Es ist erfindungsgemäß bevorzugt, dass das elastomere Material wenigstens teilweise peroxidisch vernetzt ist, mehr bevorzugt vollständig peroxidisch vernetzt ist. Im Vergleich zu peroxidisch vernetzten Elastomeren, insbesondere peroxidisch vernetzten Fluorelastomeren, sind insbesondere mit Bisphenol vernetzte (Fluor)Elastomere regelmäßig abriebbeständiger. Erfindungsgemäß wurde überraschend gefunden, dass peroxidisch vernetztes elastomeres Material als Bestandteil (a) zu einer dynamischen Wellenabdichtung mit verbesserten Abriebeigenschaften führt. Peroxidisch vernetztes elastomeres Material als Bestandteil (a) verbessert auch die Beständigkeit der erfindungsgemäßen dynamischen Wellenabdichtung gegenüber abzudichtenden Medien. Bilden Fluorelastomere teilweise oder vollständig den Bestandteil (a), so können diese vorteilhaften Wirkungen noch ausgeprägter sein.

Es ist erfindungsgemäß bevorzugt, dass die dynamische Wellenabdichtung kein Polyimid und/oder keine Fasern, insbesondere keine Aramidfasern, umfasst. Die erfindungsgemäße dynamische Wellenabdichtung kommt ohne derartige Zusätze aus, was ihre Herstellbarkeit erleichtert.

Es ist erfindungsgemäß bevorzugt, dass die dynamische Wellenabdichtung, insbesondere als Radialwellendichtring, eine Laufspurbreite von maximal < 0.60 mm aufweist, bevorzugt von maximal < 0.55 mm, mehr bevorzugt von maximal < 0.50 mm. Die Bestimmung der Laufspurbreite der Dichtkanten wird mittels eines optischen Mikroskops bei 25-facher Vergrößerung durchgeführt. Bei Verwendung in einem tribologischen System nimmt der Abrieb einer dynamischen Wellenabdichtung mit der Zeit zu. Der Abrieb zeigt sich u.a. in der sogenannten Laufspurbreite. Diese entspricht der Breite der Gegenlauffläche, auf welcher die dynamische Wellenabdichtung läuft. Die Laufspurbreite ist anfangs niedrig und wird im Laufe der Verwendung breiter. Wenn die Laufspurbreite zu breit wird, erleidet das tribologische System eine Leckage. Eine erfindungsgemäße dynamische Wellenabdichtung mit einer bevorzugten Laufspurbreite von maximal < 0.60 mm, besser von maximal < 0.55 mm, noch besser von maximal < 0.50 mm kann eine Leckage des betroffenen tribologisches Systems verhindern.

Es ist erfindungsgemäß bevorzugt, dass die dynamische Wellenabdichtung weitere Füllstoffe enthält. Als Füllstoffe sind anorganische Füllstoffe und organische Füllstoffe einsetzbar. Beispiele für anorganische Füllstoffe sind Silicate, bevorzugt Alumosilicate und Calciumsilicate, mehr bevorzugt Kaolinit mit der Formel Al₄[(OH)₈|Si₄O₁₀] und/oder Wollastonit mit der Formel Ca₃[Si₃O₉]. Beispiele für organische Füllstoffe sind Polymerfüllstoffe und Baumwolle. Erfindungsgemäß sind die Füllstoffe bevorzugt anorganische Füllstoffe, mehr bevorzugt Silicate, noch mehr bevorzugt Alumomsilicate und Calciumsilicate, insbesondere Kaolinit und Wollastonit. Es ist erfindungsgemäß bevorzugt, dass die dynamische Wellenabdichtung derartige Füllstoffe in einer Menge von 10 bis 50 phr, mehr bevorzugt von 20 bis 40 phr enthält. Es ist erfindungsgemäß insbesondere bevorzugt, dass die dynamische Wellenabdichtung anorganische Füllstoffe, mehr bevorzugt Silicate, noch mehr Calciumsilicate und insbesondere Wollastonit in einer Menge von 10 bis 50 phr, mehr bevorzugt von 20 bis 40 phr enthält.

Gegenstand der vorliegenden Erfindung ist auch ein tribologisches System, umfassend:
(A) eine Welle, und
(B) eine erfindungsgemäße und an die Welle dichtend anliegende dynamische Wellenabdichtung.

Erfindungsgemäß wurde überraschend gefunden, dass ein solches tribologisches System ein verbessertes Verschleißverhalten zeigt, d.h. eine Verringerung des Abriebs. Die Verringerung des Verschleißes wird in der technischen Anwendung sichtbar, wenn die dynamische Wellenabdichtung eine abdichtende Wirkung entfaltet. Dies geschieht, wenn die dynamische Wellenabdichtung an eine Welle dichtend anliegt. Dabei zeigt sich eine Verringerung des Verschleißes sowohl an der dynamischen Wellenabdichtung als auch an der Welle.

Im Rahmen der vorliegenden Erfindung bezieht sich "Welle" auf ein längliches und regelmäßig zylinderförmiges Element. Eine Welle dient typischerweise zum Weiterleiten von Drehbewegungen und Drehmomenten zwischen von mit ihr fest verbundenen Teilen. Eine solche Welle weist eine längliche Außenseite auf, an welche in einem tribologischen System eine dynamische Wellenabdichtung anliegen kann. Dabei liegt die dynamische Wellenabdichtung so an, dass zwei voneinander getrennte Halbräume geschaffen werden. Durch die dynamische Wellenabdichtung wird ein Übergang eines Mediums zwischen den Halbräumen verhindert. Die dynamische Wellenabdichtung liegt also dichtend an. Die längliche Außenseite der Welle entspricht in dem Bereich, in dem die dynamische Wellenabdichtung anliegt, der Gegenlauffläche der dynamischen Wellenabdichtung.

Bei Betrieb des erfindungsgemäßen tribologischen Systems gleitet die dynamische Wellenabdichtung regelmäßig mit einer Dichtkante einer Dichtlippe auf der dann rotierenden Wellenoberfläche. Der Innendurchmesser der Dichtlippe ist im ungespannten Zustand typischerweise kleiner als der Wellendurchmesser. Diese Durchmesserdifferenz wird Überdeckung (Vorspannung) genannt. Die Dichtkante wird im Betrieb in radialer Richtung an die Wellenoberfläche angepresst. Dadurch entsteht eine Radialkraft auf die Wellenoberfläche. Die Radialkraft einer dynamischen Wellenabdichtung lässt zum Beispiel durch Alterung eines in der dynamischen Wellenabdichtung enthaltenen elastomeren Materials im Laufe der Zeit nach. In einem erfindungsgemäßen tribologischen System kann ein Nachlassen einer erwünschten Radialkraft über einen längeren Zeitraum des Betriebs des tribologisches Systems verhindert werden. Die Radialkraft wird mit einem Radiameter nach DIN 3761 Teil 9 bestimmt.

Die dynamische Wellenabdichtung in dem erfindungsgemäßen tribologischen System ist eine erfindungsgemäße dynamische Wellenabdichtung. Mit einer erfindungsgemäßen dynamischen Wellenabdichtung wird in dem tribologischen System der Verschleiß an der dynamischen Wellenabdichtung und/oder der Verschleiß an der Welle weiter verringert.

Es ist erfindungsgemäß bevorzugt, dass die Welle in dem erfindungsgemäßen tribologischen System eine Metalloberfläche aufweist, an welche die dynamische Wellenabdichtung dichtend anliegt. Die Metalloberfläche bildet in dem tribologischen System die Gegenlauffläche der dynamischen Wellenabdichtung. Erfindungsgemäß wird bei einer solchen Metalloberfläche ein weiter verringerter Verschleiß durch die dichtend anliegende dynamische Wellenabdichtung beobachtet.

Es ist erfindungsgemäß bevorzugt, dass das erfindungsgemäße tribologische System mit mindestens einem Schmierstoff geschmiert ist. Der Schmierstoff ist bevorzugt aus Ölen und Fetten ausgewählt. Erfindungsgemäß kann der Schmierstoff ein einzelnes Öl oder ein Ölgemisch sein. Erfindungsgemäß kann der Schmierstoff ein einzelnes Fett oder ein Fettgemisch sein. Erfindungsgemäß kann der Schmierstoff eine Mischung aus einem oder mehreren Ölen und einem oder mehreren Fetten sein. Die dynamische Wellenabdichtung verhindert einen Schmierstoffaustrag aus dem tribologischen System. Die erfindungsgemäße dynamische Wellenabdichtung weist eine hohe Beständigkeit gegenüber abzudichtenden Schmierstoffen auf, insbesondere gegenüber Ölen und Fetten.

Gegenstand der Erfindung ist auch die Verwendung einer erfindungsgemäßen dynamischen Wellenabdichtung zur Verringerung des Abriebs der dynamischen Wellenabdichtung und/oder einer Gegenlauffläche, an welche die dynamische Wellenabdichtung dichtend anliegt.

Es ist erfindungsgemäß bevorzugt, dass bei der erfindungsgemäßen Verwendung die Gegenlauffläche aus Metall besteht und eine längsseitige Außenfläche einer Welle bildet. Bei einer solchen Metalloberfläche wird ein weiter verringerter Verschleiß durch die an der längsseitigen Außenfläche dichtend anliegenden dynamischen Wellenabdichtung beobachtet.

Bei der erfindungsgemäßen Verwendung kommt eine erfindungsgemäße dynamische Wellenabdichtung zum Einsatz. Damit lassen sich in der erfindungsgemäßen Verwendung alle hierin genannten Vorteile der erfindungsgemäßen dynamischen Wellenabdichtung erzielen.

Gegenstand der Erfindung ist auch ein Verfahren zur Verringerung von Abrieb, umfassend die Schritte:
(i) Bereitstellen einer erfindungsgemäßen dynamischen Wellenabdichtung,
(ii) Anordnen der dynamischen Wellenabdichtung derart, dass die dynamische Wellenabdichtung an einer Welle dichtend anliegt, und
(iii) rotatorisches Bewegen der Welle.

In dem erfindungsgemäßen Verfahren wird eine erfindungsgemäße dynamische Wellenabdichtung eingesetzt. Damit lassen sich in dem erfindungsgemäßen Verfahren alle hierin genannten Vorteile der erfindungsgemäßen dynamischen Wellenabdichtung erzielen.

Es ist erfindungsgemäß bevorzugt, dass das erfindungsgemäße Verfahren in einem erfindungsgemäßen tribologischen System durchgeführt wird. Damit lassen sich in dem erfindungsgemäßen Verfahren alle hierin genannten Vorteile des erfindungsgemäßen tribologischen Systems erzielen.

### Kurzbeschreibung der Zeichnungen

Figur 1 ist eine mit einem Transmissionselektronenmikroskop angefertigte Aufnahme (TEM-Aufnahme) einer erfindungsgemäßen Mischung, die nur Graphen enthält, d.h. nur Graphen ohne chemisch modifizierte Oberfläche;
Figur 2 ist eine TEM-Aufnahme einer als Referenz dienenden Mischung, die nur mineralischen Füllstoff enthält;
Figur 3 ist eine TEM-Aufnahme einer als Vergleichsbeispiel dienenden Mischung mit reduziertem mineralischem Füllstoff und Graphen;
Figur 4 zeigt eine optische Befundung des Beispiels 1;
Figur 5 zeigt eine optische Befundung des Beispiels 2; und
Figur 6 zeigt eine optische Befundung des Beispiels 3.

### Ausführungsbeispiele

### Materialien und Methoden

1) Die folgenden Materialien kamen zum Einsatz:

| **Handelsname** | **Substanz** | **Bezugsquelle** |
|---|---|---|
| VULKACIT NZ/EG-C | Vernetzer | Rhein-Chemie |
| Perkacit TBzTD | Vernetzer | Rhein-Chemie |
| Corax N 220 | Ruß | The Cary Company |
| Dusantox IPPD | N-Isopropyl-N'-phenyl-p-phenylendiamin | Duslo |
| Graphen SE 1132 | Graphen, pH 6,0 bis 8,0, Dichte <0,1 g/cm³, spezifische Oberfläche 180 bis 260 m²/g, Wassergehalt <1.0 Gew.-%, Teilchengröße (D₅₀, µm) <10,0, Kohlenstoff ≥93 Gew.-%, Sauerstoff <3 Gew.-%; ohne chemisch modifizierte Oberfläche; nicht funktionalisiert; | The Sixth Element Inc. |
| Graphit UF 4 96/97 | ultrafeines Graphitpulver | Graphit Kropfmühl |
| Kumanox 13 (6PPD) | N-(1,3-Dimethylbutyl)-N'-phenyl-p-phenylendiamin | Kumho Petrochemical |
| Luperox 101 | 2,5-Bis(tert-butylperoxy)-2,5-dimethylhexan | Sigma-Aldrich |
| Nanocyl NC 7000 | vielwandige Kohlenstoffnanoröhrchen | Nanocyl SA |
| Palmera B 1805 | Stearinsäure | Avokal |
| Perbunan 2870 F | Acrylnitril-Butadien-Kautschuk | Lanxess |
| Rhenogran S-80 | Härtemittel, 80% Schwefel, 20% Elastomerbindemittel und Dispergiermittel | Lanxess |
| Rhenogran ZnO-80 | Härtemittel, 80% Zinkoxid, 20% Elastomerbindemittel und Dispergiermittel | Lanxess |
| TAIC | Triallylisocyanurat | Kettlitz |
| Tecnoflon P757 | mittelviskoses, teilfluoriertes (67%) und peroxidisch vernetzbares Fluorelastomer | Solvay |
| Wollastocoat | Wollastonit | Imerys |
| | | |
| Vulkalent E/C | N-Phenyl-N-(trichlormethylsulphenyl)benzolsulphonamid mit Additiven | Lanxess |

2) Die folgenden Parameter wurden wie angegeben bestimmt:
Härte, in ShA: Härteprüfung nach Shore A gemäß DIN 53505:2000-08
M100 %, in MPa: Modulwert, gleich Spannungswert bei 100% Dehnung, gemäß DIN 53504
Zugfestigkeit (ZF), in MPa: gemäß DIN 53504:2007-13, Bedingung S2, bei 23°C
Bruchdehnung (BD), in %: gemäß DIN 53504:2007-13, Bedingung S2, bei 23°C
Druckverformungsrest (DVR), in %, gemäß DIN ISO 815, A

3) Die folgenden Prüfverfahren kamen zum Einsatz:

### Prüfanordnung für radiale Dehnung:

BAB3SL 0,5 60-80-7; von LC Simmerring Industry, Staublippe entfernt
Medium: Mobil Nuto H68; 80°C
3000 1/min; Anordnung in der Mitte des Schafts
24 h 0 bar/48 h 1,5 bar/1 h 0 bar

### Stift/Scheibe-Tribometer:

Medium: MOTUL 8100 X-clean 5W40; RT
Normallast: 40 N
Gleitgeschwindigkeit: 10 mm/s
Hub: 100 mm
4 Zyklen, 60 Sekunden Wartezeit zwischen Zyklen, Analyse von 3 Zyklen
Δ-Radialkraft (delta-Radialkraft), in %: DIN 3761 Teil 9 Radiameter
Laufspurbreite, in mm: Flender Spezifikation FS PLM 1110008 bestimmt
Optische Befundung, als Gesamtnote: Flender Spezifikation FS PLM 1110008 bestimmt
Gesamtnote: Flender Spezifikation FS PLM 1110008 bestimmt
Statischer Reibungskoeffizient µ, dimensionslos: Der statische Reibkoeffizient ist derjenige, der gemessen wird, wenn die sich berührenden Oberflächen noch nicht in Relativbewegung zueinander stehen, allgemein auch als Haftreibungskoeffizient bekannt.
Dynamischer Reibungskoeffizient µ, dimensionslos: Der dynamische Reibkoeffizient ist in Konsequenz derjenige, wenn sich die beiden Oberflächen relativ zueinander bewegen (Gleitreibungskoeffizient)

### Beispiele 1 bis 4

Es wurde eine Mischungsreihe erstellt. Eine Mischung nur mit dem mineralischem Füllstoff Wollastonit dient als Referenz (Beispiel 1). In weiteren Mischungen wurde das Wollastonit teilweise entweder durch CNTs (Beispiel 2), Graphen (Beispiel 3) oder Graphit (Beispiel 4) ersetzt. Aus diesen Mischungen wurden jeweils Prüfplatten und dynamische Wellenabdichtungen, nämlich Radialwellendichtringe (RWDR), gefertigt. An den Prüfplatten wurden die mechanischen Werte bestimmt. Die Tabelle 1 führt die Zusammensetzungen der Beispiele 1 bis 4 sowie deren mechanische Eigenschaften auf.

**Tabelle 1**

| **Beispiel** | Beispiel 1 (Referenz) | Beispiel 2 (Vergleich) | Beispiel 3 (Erfindung) | Beispiel 4 (Vergleich) |
|---|---|---|---|---|
| Kohlenstoffzuschlag | - | CNT 3 phr | Graphen 0,5 phr | Graphit 2 phr |
| **Zusammensetzung** | | | | |
| Tecnoflon P757 | 100 | 100 | 100 | 100 |
| Wollastocoat | 30 | 7,5 | 24 | 24 |
| TAIC | 3 | 3 | 3 | 3 |
| Luperox 101 | 5 | 5 | 5 | 5 |
| Nanocyl NC 7000 | - | 3,5 | - | - |
| Graphen SE 1132 | - | - | 0,5 | - |
| Graphit UF 4 96/97 | - | - | - | 2 |
| TAIC | 1,5 | 1,5 | 1,5 | 1,5 |
| Luperox 101 XL 45 E | 2 | 2 | 2 | 2 |
| **Mechanische Eigenschaften** | | | | |
| Härte [ShA] | 72 | 71 | 69 | 69 |
| ZF [MPa] | 14,9 | 20,6 | 14,8 | 12,8 |
| BD [%] | 338 | 310 | 363 | 384 |
| DVR [%] | 19 | 19 | 13 | 17 |

Die Mischungen wurden auf eine vergleichbare Härte eingestellt. Ohne an die Theorie gebunden zu sein wird erfindungsgemäß davon ausgegangen, dass bei vergleichbarer Härte auch die Oberflächen der Füllstoffsysteme näherungsweise vergleichbar sind.

Neben den mechanischen Eigenschaften wurde das Verschleißverhalten der aus den beispielsgemäßen Mischungen gefertigten Radialwellendichtringe geprüft. Dazu wurden die Radialwellendichtringe am Prüfstand unter realitätsnahen Bedingungen auf Verschleißverhalten sowohl am Bauteil als auch an der Gegenlauffläche der Welle getestet. Die Tabelle 2 führt die Beispiele 1 bis 4 im Zusammenhang mit den ermittelten Verschleißeigenschaften auf.

**Tabelle 2**

| **Beispiel** | Beispiel 1 (Referenz) | Beispiel 2 (Vergleich) | Beispiel 3 (Erfindung) | Beispiel 4 (Vergleich) |
|---|---|---|---|---|
| Kohlenstoffzuschlag | - | CNT 3,5 phr | Graphen 0,5 phr | Graphit 2,0 phr |
| **Prüflauf am RWDR** | | | | |
| Δ Radialkraft [%] (l/r) | -26,4/-8,0 | -21,2/-13,7 | -3,1/-5,7 | -2,0/-3,6 |
| Laufspurbreite [mm] (l/r) | 0,63 - 0,89 0,37 - 0,48 | 0,56 - 0,7 0,44 - 0,7 | 0,37 - 0,52 0,37 - 0,48 | 0,67 0,74 - 0,85 |
| optische Befundung (Gesamtnote) (l/r) | 1,9/1,1 | 1,8/1,9 | 1,3/1,4 | 1,8/1,8 |
| Gesamtnote (l/r) | 1,9/1,2 | 1,6/1,6 | 1,2/1,2 | 1,6/2,2 *Leckage |
| **Stift/Scheibe** | | | | |
| Statischer Reibungskoeffizient µ [-] | 0,42 | 0,36 | 0,46 | - |
| Dynamischer Reibungskoeffizient µ [-] | 0,23 | 0,19 | 0,26 | - |

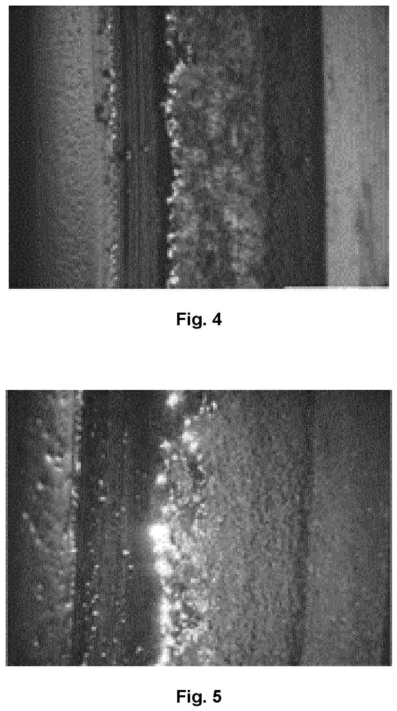

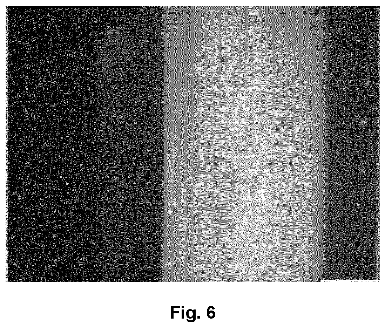

Die in der Tabelle 2 aufgeführten optischen Befundungen quantifizieren die in den Figuren gezeigten Messergebnisse. Die Fig. 4 bis 6 zeigen optische Befundungen der Referenz (Fig. 4), der CNT-haltigen Mischung (Fig. 5) sowie der Graphen-haltigen Mischung (Fig. 6). Die Befundungen der Fig. 4 und 5 sind dabei insgesamt vergleichbar. Die Befundung der Fig. 6 belegt deutlich verbesserte Abriebeigenschaften.

Überraschend war insgesamt, dass eine Zugabe von lediglich geringen Mengen Graphen ausreichend ist, um eine deutliche Verbesserung des Verschleißverhaltens zu erzielen. Die überraschende Verbesserung zeigt sich hier im Vergleich zu CNT- oder Graphitgefüllten Mischungen, die chemisch eine ähnliche Struktur aufweisen (Kohlenstoff mit sp2-Hybridisierung). Im Beispiel 3 ist das Nachlassen der Radialkraft deutlich vermindert. Im Beispiel 3 ist auch die Laufspurbreite deutlich vermindert. Das erfindungsgemäße Beispiel 3 liefert die beste optische Befundung. Überraschend ist auch, dass die Graphen-Mischung im Gesamtfüllstoffanteil sinkt, und dennoch vergleichbare Härten und Zugfestigkeiten gefunden werden.

Üblicherweise werden insbesondere große, harte Füllstoffsysteme wie Kaolinit, Wollastonit etc. verwendet. Diese werden eingesetzt, damit der vergleichsweise abriebunbeständige Kautschuk durch diese harten und abriebbeständigen Füllstoffe geschützt wird. Erfindungsgemäß wurde überraschend gefunden, dass die Verminderung des harten Füllstoffes Wollastonit gegenüber der Referenz durch den deutlich weicheren Füllstoff Graphen im Beispiel 3 trotzdem zu einer Verbesserung der Verschleißbeständigkeit in Form einer geringeren Laufspurbreite führt.

Ergänzend wurde in der weiteren Versuchsreihe untersucht, wie sich die Elastomermischungen unter statischen, dynamischen bzw. rotatorischen Reibungskräften verhalten. Dabei wurde ein Stift/Scheibe-Test durchgeführt, um translatorische Anwendungen zu simulieren. Für Anwendungen mit rotatorischer Bewegung wurde ein Prüflauf am Radialwellendichtring durchgeführt.

Die Prüfungen mit dem Stift/Scheibe-Tribometer ergaben ein vollständig anderes Bild. Die Graphen-haltige Mischung des Beispiels 3 zeigte keine Verbesserung im statischen oder dynamischen Reibungskoeffizienten. Demgegenüber zeigte das Beispiel 2 mit CNT eine gewisse Verbesserung. Davon ausgehend wird vermutet, dass Graphen in translatorischen Dichtungen mit gegenläufigen bzw. reziproken Bewegungen zu keinen Verbesserungen des Verschleißes führen wird. Für rotatorische Dichtungen wie dynamische Wellenabdichtungen mit radialer Bewegung führt der Einsatz von Graphen überraschender Weise zu einer deutlichen Verbesserung des Verschleißes.

In den obigen Beispielen wurden Mischungen mit Fluorelastomer bzw. Fluorkautschuk untersucht. Der Einsatz von Graphen in diesem elastomeren Material hat sich hinsichtlich des Verhaltens eines daraus gefertigten Radialwellendichtrings als besonders vorteilhaft herausgestellt. Zudem konnte hier Peroxid zur Vernetzung eingesetzt werden, um zusätzlich noch Beständigkeit gegenüber Medien wie Schmierstoffen, insbesondere gegenüber Ölen und Fetten, zu erreichen. Diese sind normalerweise schlechter im Verschleiß als bisphenolisch vernetzte Mischungen

### Beispiele 5 und 6

Um die Wirksamkeit einer Beimengung bereits kleiner Mengen von Graphen auf die mechanischen Eigenschaften einer Elastomermischung zu untersuchen, wurde im Beispiel 5 ergänzend eine Mischung mit Nitril-Butadien-Kautschuk zubereitet. Zu dieser Mischung wurde ferner kein peroxidisches Vernetzungsmittel zuggegeben. Zum Vergleich wurde eine entsprechende Mischung ohne Graphen und mit erhöhtem Rußanteil als Beispiel 6 zubereitet. Die Tabelle 5 stellt das Beispiel 5 und das Beispiel 6 zusammen mit den ermittelten mechanischen Eigenschaften gegenüber.

**Tabelle 5**

| **Beispiel** | Beispiel 5 (Erfindung) | Beispiel 6 (Vergleich) |
|---|---|---|
| Perbunan 2870 F | 95,6 | 97,5 |
| Palmera B 1805 | 1 | 1 |
| Corax N 220 | 64 | 70 |
| Graphen SE 1132 | 0,5 | - |
| | | |
| Kumanox 13 (6PPD) | 1,5 | 1,5 |
| Dusantox IPPD | 1,5 | 1,5 |
| VULKACIT NZ/EG-C | 1 | 1 |
| Perkacit TBzTD | 0,5 | 0,5 |
| Rhenogran S-80 | 0,75 | 0,5 |
| Rhenoqran ZnO-80 | 6,25 | 6,25 |
| Vulkalent E/C | 2 | 2 |
| **Mechanische Eigenschaften** | | |
| Härte [ShA] | 78 | 80 |
| M100 % [Mpa] | 5,7 | 6,1 |
| ZF [MPa] | 26,7 | 25,5 |
| BD [%] | 347 | 280 |
| DVR [%] 24 h/100°C | 32 | 36 (72 h) |

Beide Zubereitungen waren im Hinblick auf Härte, Spannungswert bei 100% Dehnung sowie Zugfestigkeit vergleichbar. Es zeigt sich, dass bei ansonsten vergleichbaren Eigenschaften die Bruchdehnung im Beispiel 5 deutlich verbessert war. Somit hat die geringe Zugabe von Graphen in diesem Beispiel auch bei Verwendung eines anderen, von FKM verschiedenen Elastomers und auch ohne Einsatz von Peroxid als Vernetzungsmittel einen positiven Einfluss auf die mechanischen Eigenschaften, insbesondere auf die Bruchdehnung.

### Beispiel 7

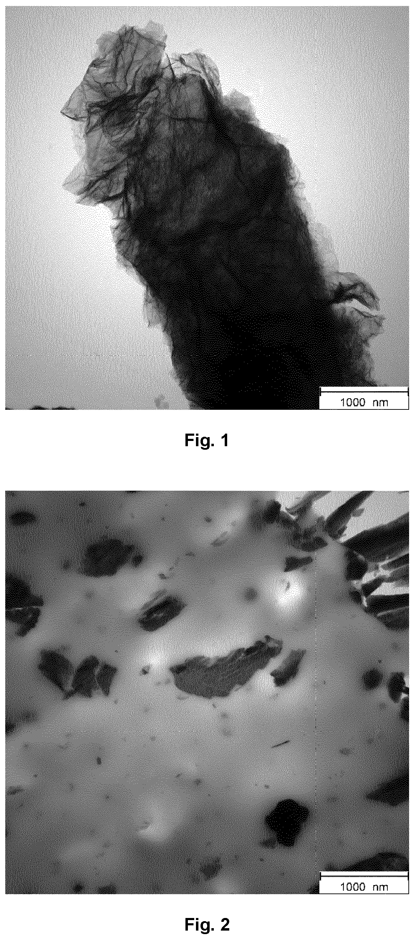

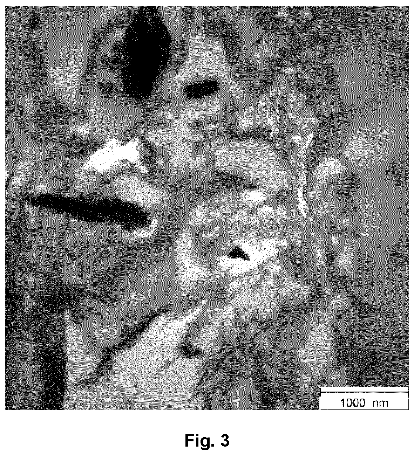

Graphen wurde im Transmissionselektronenmikroskop als Struktur nachgewiesen, die als "tüllartig" beschrieben werden kann, siehe auch Fig. 1. Es konnte gezeigt werden, dass die Morphologie und Größe nach dem Einmischen in die Gummimatrix komplett erhalten waren. Eine Vernetzung oder Verknüpfung des Graphens mit der Gummimatrix erfolgte nicht. Die Ausmaße in Länge und Breite können von weniger als 100 nm bis zu mehreren Mikrometern reichen. Die Dicke ist, wie oben beschrieben, erkennbar sehr gering. In den TEM-Aufnahmen erscheinen die Plättchen an den glatt aufliegenden Stellen geradezu durchsichtig. Die Partikel sind durch die geringe Dicke an manchen Stellen gestaucht. Im Gegensatz dazu erscheint ein mineralischer Füllstoff in einer TEM-Aufnahme als eher undurchsichtig und klobig, wie dies aus Fig. 2 ersichtlich wird. Die Fig. 3 zeigt eine TEM-Aufnahme einer Mischung, die sowohl Graphen als auch mineralischen Füllstoff enthält. Die filigranen Bereiche mit Graphen einerseits und die massiv erscheinenden Bereiche mit mineralischem Füllstoff andererseits sind deutlich erkennbar.

## Patentansprüche

1. Dynamische Wellenabdichtung, umfassend:
(a) elastomeres Material, und
(b) Graphen,
**dadurch gekennzeichnet, dass** das Graphen ohne chemisch modifizierte Oberfläche ist und in einer Menge von 0,1 bis 2 phr, bezogen auf 100 Gewichtsteile des elastomeren Materials, als einziger Bestandteil der dynamischen Wellenabdichtung aus elementarem Kohlenstoff, enthalten ist.

2. Dynamische Wellenabdichtung gemäß Anspruch 1, wobei das Graphen eine Schichtdicke von < 3,35 nm aufweist.

3. Dynamische Wellenabdichtung gemäß mindestens einem der vorhergehenden Ansprüche, wobei die dynamische Wellenabdichtung Graphen in einer Menge von 0,1 bis 1 phr, bezogen auf 100 Gewichtsteile des elastomeren Materials, umfasst.

4. Dynamische Wellenabdichtung gemäß mindestens einem der vorhergehenden Ansprüche, wobei die dynamische Wellenabdichtung aus einer Zusammensetzung besteht, die einen Druckverformungsrest gemäß DIN ISO 815, A von ≤ 16% aufweist.

5. Dynamische Wellenabdichtung gemäß mindestens einem der vorhergehenden Ansprüche, wobei das elastomere Material Fluorkautschuk umfasst.

6. Dynamische Wellenabdichtung gemäß mindestens einem der vorhergehenden Ansprüche, wobei das elastomere Material wenigstens teilweise peroxidisch vernetzt ist.

7. Dynamische Wellenabdichtung gemäß mindestens einem der vorhergehenden Ansprüche, wobei die dynamische Wellenabdichtung kein Polyimid und/oder keine Fasern umfasst.

8. Dynamische Wellenabdichtung gemäß mindestens einem der vorhergehenden Ansprüche, wobei die dynamische Wellenabdichtung eine Laufspurbreite von maximal < 0.60 mm aufweist, bestimmt mittels eines optischen Mikroskops bei 25-facher Vergrößerung.

9. Tribologisches System, umfassend:
(A) eine Welle, und
(B) eine an die Welle dichtend anliegende dynamische Wellenabdichtung gemäß Anspruch 1.

10. Tribologisches System gemäß Anspruch 9, wobei die dynamische Wellenabdichtung eine dynamische Wellenabdichtung gemäß mindestens einem der Ansprüche 2 bis 8 ist.

11. Tribologisches System gemäß Anspruch 9 oder 10, wobei die Welle eine Metalloberfläche aufweist, an welche die dynamische Wellenabdichtung dichtend anliegt.

12. Tribologisches System gemäß mindestens einem der Ansprüche 9 bis 11, wobei das tribologische System mit mindestens einem Schmierstoff geschmiert ist.

13. Verwendung einer dynamischen Wellenabdichtung gemäß Anspruch 1 zur Verringerung des Abriebs der dynamischen Wellenabdichtung und/oder einer Gegenlauffläche, an welche die dynamische Wellenabdichtung dichtend anliegt.

14. Verwendung gemäß Anspruch 13, wobei die Gegenlauffläche aus Metall besteht und eine längsseitige Außenfläche einer Welle bildet.

15. Verfahren zur Verringerung von Abrieb, umfassend die Schritte:
(i) Bereitstellen einer dynamischen Wellenabdichtung gemäß Anspruch 1,
(ii) Anordnen der dynamischen Wellenabdichtung derart, dass die dynamische Wellenabdichtung an einer Welle dichtend anliegt, und
(iii) rotatorisches Bewegen der Welle.

## Claims

1. Dynamic shaft seal comprising:
(a) elastomeric material and
(b) graphene,
**characterized in that** the graphene does not have a chemically modified surface and is present in an amount of 0.1 to 2 phr based on 100 parts by weight of the elastomeric material as the sole constituent of the dynamic shaft seal composed of elemental carbon.

2. Dynamic shaft seal according to Claim 1, wherein the graphene has a layer thickness of < 3.35 nm.

3. Dynamic shaft seal according to at least one of the preceding claims, wherein the dynamic shaft seal comprises graphene in an amount of 0.1 to 1 phr based on 100 parts by weight of the elastomeric material.

4. Dynamic shaft seal according to at least one of the preceding claims, wherein the dynamic shaft seal is composed of a composition having a compression set according to DIN ISO 815 A of ≤ 16%.

5. Dynamic shaft seal according to at least one of the preceding claims, wherein the elastomeric material comprises fluororubber.

6. Dynamic shaft seal according to at least one of the preceding claims, wherein the elastomeric material is at least partially peroxidically crosslinked.

7. Dynamic shaft seal according to at least one of the preceding claims, wherein the dynamic shaft seal comprises no polyimide and/or no fibres.

8. Dynamic shaft seal according to at least one of the preceding claims, wherein the dynamic shaft seal has a wear scar width of at most < 0.60 mm determined using an optical microscope at 25-fold magnification.

9. Tribological system comprising:
(A) a shaft and
(B) a dynamic shaft seal according to Claim 1 which bears sealingly against the shaft.

10. Tribological system according to Claim 9, wherein the dynamic shaft seal is a dynamic shaft seal according to at least one of Claims 2 to 8.

11. Tribological system according to Claim 9 or 10, wherein the shaft has a metal surface against which the dynamic shaft seal bears sealingly.

12. Tribological system according to at least one of Claims 9 to 11, wherein the tribological system is lubricated with at least one lubricant.

13. Use of a dynamic shaft seal according to Claim 1 for reducing the abrasion of the dynamic shaft seal and/or a counterface against which the dynamic shaft seal bears sealingly.

14. Use according to Claim 13, wherein the counterface is composed of metal and forms a longitudinal outer surface of a shaft.

15. Method of reducing abrasion comprising the steps of:
(i) providing a dynamic shaft seal according to Claim 1,
(ii) arranging the dynamic shaft seal such that the dynamic shaft seal bears sealingly against a shaft and
(iii) rotating the shaft.

## Revendications

1. Joint d'arbre dynamique, comprenant :
(a) un matériau élastomère, et
(b) du graphène,
**caractérisé en ce que** le graphène est dépourvu de surface chimiquement modifiée et est contenu en une quantité de 0,1 à 2 pce, sur la base de 100 parties en poids du matériau élastomère, en tant que seul constituant du joint d'arbre dynamique en carbone élémentaire.

2. Joint d'arbre dynamique selon la revendication 1, dans lequel le graphène présente une épaisseur de couche < 3,35 nm.

3. Joint d'arbre dynamique selon au moins l'une quelconque des revendications précédentes, dans lequel le joint d'arbre dynamique comprend du graphène en une quantité de 0,1 à 1 pce, sur la base de 100 parties en poids du matériau élastomère.

4. Joint d'arbre dynamique selon au moins l'une quelconque des revendications précédentes, dans lequel le joint d'arbre dynamique est constitué d'une composition présentant une déformation rémanente après compression selon la norme DIN ISO 815, A de ≤ 16 %.

5. Joint d'arbre dynamique selon au moins l'une quelconque des revendications précédentes, dans lequel le matériau élastomère comprend du caoutchouc fluoré.

6. Joint d'arbre dynamique selon au moins l'une quelconque des revendications précédentes, dans lequel le matériau élastomère est au moins partiellement réticulé par un peroxyde.

7. Joint d'arbre dynamique selon au moins l'une quelconque des revendications précédentes, dans lequel le joint d'arbre dynamique ne comprend pas de polyimide et/ou de fibres.

8. Joint d'arbre dynamique selon au moins l'une quelconque des revendications précédentes, dans lequel le joint d'arbre dynamique présente une largeur de piste de roulement d'au maximum < 0,60 mm, déterminée au moyen d'un microscope optique à un grossissement de 25 fois.

9. Système tribologique, comprenant :
(A) un arbre, et
(B) un joint d'arbre dynamique s'appliquant de manière étanche contre l'arbre selon la revendication 1.

10. Système tribologique selon la revendication 9, dans lequel le joint d'arbre dynamique est un joint d'arbre dynamique selon au moins l'une quelconque des revendications 2 à 8.

11. Système tribologique selon la revendication 9 ou 10, dans lequel l'arbre présente une surface métallique contre laquelle le joint d'arbre dynamique s'applique de manière étanche.

12. Système tribologique selon au moins l'une quelconque des revendications 9 à 11, dans lequel le système tribologique est lubrifié par au moins un lubrifiant.

13. Utilisation d'un joint d'arbre dynamique selon la revendication 1 pour réduire l'abrasion du joint d'arbre dynamique et/ou d'une contre-surface de roulement contre laquelle le joint d'arbre dynamique s'applique de manière étanche.

14. Utilisation selon la revendication 13, dans laquelle la contre-surface de roulement est constituée de métal et forme une surface extérieure longitudinale d'un arbre.

15. Procédé de réduction de l'abrasion, comprenant les étapes suivantes :
(i) la fourniture d'un joint d'arbre dynamique selon la revendication 1,
(ii) l'agencement du joint d'arbre dynamique de telle sorte que le joint d'arbre dynamique s'applique de manière étanche contre un arbre, et
(iii) le déplacement en rotation de l'arbre.
